# EUROPÄISCHE PATENTSCHRIFT

(11) **EP 1 391 409 B1**
(45) Veröffentlichungstag und Bekanntmachung des Hinweises auf die Patenterteilung: **28.07.2010**
(21) Anmeldenummer: 03015415.7
(22) Anmeldetag: 09.07.2003
(51) Int. Cl.: B65H 31/30, B25J 15/00, B25J 19/00

(54) **Roboter-Greifvorrichtung**
Robotic gripping device
Dispositif de saisie robotique

(30) Priorität: 22.08.2002 DE 10238458; 08.11.2002 DE 20217247 U
(43) Veröffentlichungstag der Anmeldung: 25.02.2004
(73) Patentinhaber: Maschinen- und Stahlbau Julius Lippert GmbH & Co. KG, 92690 Pressath (DE)
(72) Erfinder: Reichl, Helmut, 92690 Pressath (DE)
(74) Vertreter: LOUIS, PÖHLAU, LOHRENTZ

(56) Entgegenhaltungen:
- EP-A- 0 749 812
- EP-A- 1 155 984
- DE-A- 3 024 133
- US-A- 4 746 255
- PATENT ABSTRACTS OF JAPAN vol. 011, no. 172 (M-595), 3. Juni 1987 (1987-06-03) -& JP 62 004132 A (OKURA YUSOKI CO LTD), 10. Januar 1987 (1987-01-10)

## Beschreibung

Die Erfindung betrifft eine Roboter-Greifvorrichtung gemäß dem Oberbegriff des Anspruches 1.

Eine derartige Roboter-Greifvorrichtung ist aus der DE 30 24 133 A1 bekannt. Diese bekannte Roboter-Greifvorrichtung ist insbesondere für im Einzelnen leichte und leicht verformbare Güter, wie Zeitschriften, vorgesehen.

Die JP-A 62 004 132 offenbart eine Roboter-Greifvorrichtung für schwere Lasten, mit einer Greiferaufhängung, einem in einer ersten Raumrichtung bewegbaren Greiferorgan und einem Anschlagorgan, das in einer zur ersten Raumrichtung senkrechten zweiten Raumrichtung orientiert ist.

Eine Roboter-Greifvorrichtung zum automatischen Be- und Entladen einer Transporteinrichtung mit Gegenständen, insbesondere mit stoß- und/oder bruchempfindlichem Gut, wobei die Roboter-Greifvorrichtung ein an einen Roboter anschließbares Basiselement und eine Greiferaufhängung aufweist, ist aus der EP 0 749 812 A1 bekannt. Diese bekannte Roboter-Greifvorrichtung wird z.B. an einem Arm eines Mehrgelenk-Roboters angebracht, um mit dem Roboter Gegenstände, insbesondere stoß- und/oder bruchempfindliches Gut, zuverlässig greifen zu können, um das besagte Gut dann mit Hilfe der Roboter-Greifvorrichtung z.B. an eine Transporteinrichtung zu übergeben, wonach die Roboter-Greifvorrichtung von dem manipulierten, d.h. beispielsweise an der Transporteinrichtung positionierten Gut wieder gelöst wird und zum Greifen eines weiteren Guts zur Verfügung steht. Mit Hilfe der Transporteinrichtung kann dann das Gut zu einer weiteren Station wie einer Bearbeitungsstation, einer Kontrollstation o. dgl. transportiert werden. Insbesondere bei stoß- und/oder bruchempfindlichem Gut ist es bislang jedoch erforderlich, die Greifvorrichtung relativ langsam zu betätigen, um einen Bruch des Guts zu vermeiden. Das wirkt sich auf die Produktivität bei der Herstellung des Guts infolge der relativ langsamen Manipulation entsprechend aus.

Die DE 41 17 552 C1 offenbart einen Werkzeugträger, der insbesondere am Ende eines bewegungsgesteuerten Roboterarms vorgesehen ist, und der in mindestens einer Bewegungsrichtung zum Ausgleich von Lage- und/oder Abmessungstoleranzen des zu bearbeitenden Werkstücks gegenüber seiner Mittellage am Roboterarmende oder dergl. über eine Parallelführung, insbesondere in Form eines Führungsschlittens, verschiebbar ist, und bei dem eine in Richtung der Parallelführung wirkende Gewichtskraft-Kompensiervorrichtung vorgesehen ist, durch die die in Richtung der Parallelführung wirkende Komponente der Gewichtskraft des gegenüber dem Roboterarmende verschiebbaren Teils in jeder Winkellage gegenüber der Schwerkraft ausgeglichen ist. Die Gewichtskraft-Kompensiervorrichtung weist einen ersten Zylinder auf, durch dessen gesteuerte Druckbeaufschlagung der Gewichtskraftausgleich erfolgt. Zur gesteuerten Druckbeaufschlagung des Zylinders ist ein weiterer, parallel dazu verlaufender Zylinder vorgesehen, wobei die Arbeitsräume der Zylinder miteinander in Verbindung stehen.

Aus der DE 44 15 518 A1 ist eine Balanciereinrichtung für handgeführte Manipulatoren bekannt, bei der die Kolbenstange eines Pneumatikzylinders auf ein Lastaufnahmemittel für eine zu handhabende Last wirkt. Zwischen der Kolbenstange und dem Lastenaufnahmemittel ist ein elektrischer Lastsensor eingeschaltet, der in Abhängigkeit von der Kraft, die die Last ausübt, ein elektrisches Signal liefert, das unter Zwischenschaltung eines elektronischen Steuergerätes ein elektro-pneumatisches Druckregelventil so steuert, daß dem Pneumatikzylinder ein solcher pneumatischer Druck zugeführt wird, daß die Last in der Schwebe gehalten wird. Der Lastsensor ist in unmittelbarer Nähe des Lastaufnahmemittels angeordnet und mechanisch oder geometrisch so ausgebildet, daß er einerseits Bereiche oder Elemente aufweist, die Biegemomente, die aus einem seitlichen Versatz des Schwerpunktes der Last zur Wirkungslinie des Lastsensor herrühren, aufnehmen und weiterleiten kann, und der andererseits Bereiche und Elemente aufweist, die von den Biegemomenten unbeeinflußt und nur durch die aus der Last resultierenden Kraft beansprucht sind, wobei an den letzteren Bereichen oder Elementen elektrische Meßelemente zur Abgabe eines der Last proportionalen elektrischen Signales angebracht sind.

Der Erfindung liegt die Aufgabe zugrunde, eine Roboter-Greifvorrichtung der eingangs genannten Art zu schaffen, mit der es einfach und zeitsparend und somit mit hoher Produktivität möglich ist, stoß- und/oder bruchempfindliches Gut zu manipulieren, d.h. beispielsweise eine Transporteinrichtung automatisch zu beladen und/oder zu entladen.

Diese Aufgabe wird bei einer Roboter-Greifvorrichtung der eingangs genannten Art erfindungsgemäß durch die Merkmale des Anspruches 1 gelöst.

Das Greiferorgan und die Gegenhaltereinrichtung bilden quasi Klammerorgane, zwischen welchen das zu manipulierende Gut sicher festgehalten wird, um mit der Greifvorrichtung z.B. eine Transporteinrichtung einfach und zeitsparend be- und entladen zu können. Selbstverständlich ist es auch möglich, mit der erfindungsgemäßen Roboter-Greifvorrichtung stoß- und/oder bruchempfindliches Gut von einem Ort zu einem anderen Ort - ohne die Benutzung einer Transporteinrichtung - umzusetzen.

Das Anschlagorgan kann dabei z.B. als Anschlagleiste ausgebildet sein. Erfindungsgemäß ist das Anschlagorgan der Gegenhalteeinrichtung an der Greiferaufhängung federnd beweglich vorgesehen. Außerdem bildet das Anschlagorgan der Gegenhalteeinrichtung einen Berührungssensor für das zu manipulierende Gut.

Das Gegenhalterorgan der Gegenhaltereinrichtung der erfindungsgemäßen Roboter-Greifvorrichtung ist an der Greiferaufhängung in der zweiten Raumrichtung verstellbar vorgesehen, es weist vorzugsweise eine programmierbare Druckeinstellung auf, um einfach und zeitsparend eine Anpassung an die Stoß- und/oder Bruchempfindlichkeit des zu manipulierenden Gutes bewirken zu können.

Erfindungsgemäß kann das Anschlagorgan der Gegenhalteeinrichtung in der zweiten Raumrichtung höhenverschiebbar gelagert sein, wodurch zuverlässig verhindert werden kann, daß die Oberfläche des zu manipulierenden Gutes infolge einer Relativbewegung zwischen dem Anschlagorgan und der Gut-Oberfläche beschädigt wird.

Bei der erfindungsgemäßen Roboter-Greifvorrichtung ist die Gewichtsentlastung von einer programmierbaren Luftfeder gebildet, um eine einfache Anpassung an die jeweiligen Gegebenheiten, d.h. insbesondere eine Anpassung an das Gewicht der Roboter-Greifvorrichtung, zu bewirken.

Weitere Einzelheiten, Merkmale und Vorteile ergeben sich aus der nachfolgenden Beschreibung eines in der Zeichnung dargestellten Ausführungsbeispieles der erfindungsgemäßen Roboter-Greifvorrichtung bzw. der aufeinanderfolgenden Manipulationsschritte bzw. -positionen der Roboter-Greifvorrichtung für ein zu manipulierendes stoß- und/ oder bruchempfindliches Gut.

Es zeigen:
- Figur 1: eine erste Manipulationsposition der Roboter-Greifvorrichtung seitlich neben einem zu manipulierenden Gut,
- Figur 2: eine an die erste Manipulationsposition anschließende zweite Manipulationsposition der Roboter-Greifvorrichtung in Kombination mit dem zu manipulierenden Gut,
- Figur 3: eine dritte Manipulationsposition der Roboter-Greifvorrichtung mit dem zu manipulierenden Gut im Anschluß an die zweite Manipulationsposition,
- Figur 4: eine an die dritte Manipulationsposition anschließende vierte Manipulationsposition der Roboter-Greifvorrichtung mit dem zu manipulierenden Gut,
- Figur 5: eine fünfte Manipulationsposition der Roboter-Greifvorrichtung nach der vierten Manipulationsposition gemeinsam mit dem Gut,
- Figur 6: das zu manipulierende Gut und die Roboter-Greifvorrichtung in einer an die fünfte Manipulationsposition anschließenden sechsten Manipulationsposition,
- Figur 7: die Roboter-Greifvorrichtung in der sechsten bzw. in einer siebenten Position, bei der es sich um eine Reinigungsposition handelt, und
- Figur 8: einen Roboter mit einer Roboter-Greifvorrichtung gemäß den Figuren 1 bis 7, wobei die Roboter-Greifvorrichtung schematisch sowohl in einer den Figuren 2 und 4 entsprechenden Roboter- Position als auch in einer der Figur 3 entsprechenden Roboterposition dargestellt ist, gemeinsam mit einer Transporteinrichtung für das mit der Roboter-Greifvorrichtung manipulierte Gut.

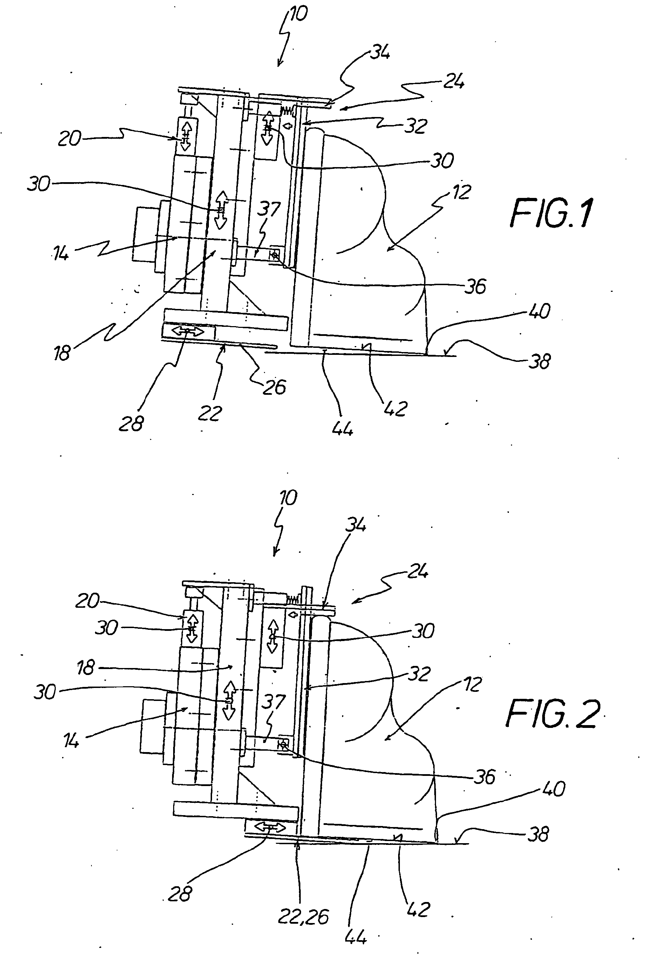

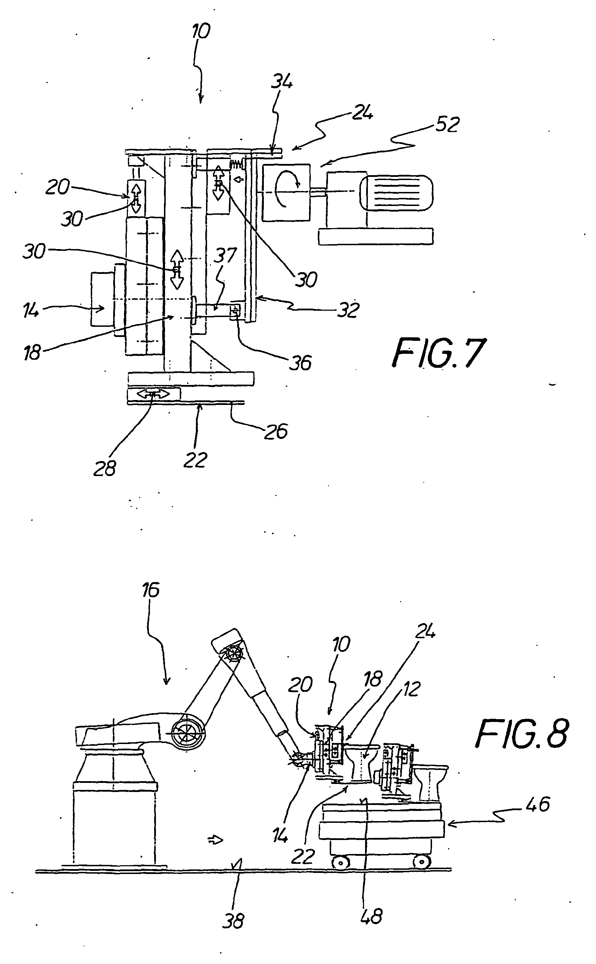

Figur 1 zeigt in einer Seitenansicht eine Roboter-Greifvorrichtung 10 zum Greifen und Manipulieren von Gegenständen, insbesondere von stoß- und/oder bruchempfindlichem Gut 12. Die Roboter-Greifvorrichtung 10 weist ein Basiselement 14 auf, das an einen Roboter 16 (sh. Figur 8) anschließbar ist. Am Basiselement 14 ist eine Greiferaufhängung 18 vorgesehen. Zwischen der Greiferaufhängung 18 und dem Basiselement 14 ist eine Gewichtsentlastung 20 vorgesehen. Die Gewichtsentlastung 20 ist von einer programmierbaren Luftfeder gebildet.

An der Greiferaufhängung 18 ist ein Greiferorgan 22 und eine Gegenhaltereinrichtung 24 vorgesehen. Das beispielsweise von einem Greiferblech 26 gebildete Greiferorgan 22 ist in einer ersten Raumrichtung hin- und herverstellbar. Das ist durch den Doppelpfeil 28 verdeutlicht. Die Gegenhaltereinrichtung 24 ist in einer zur ersten Raumrichtung 28 mindestens annähernd senkrechten zweiten Raumrichtung hin- und herverstellbar, die durch den Doppelpfeil 30 verdeutlicht ist.

Die Greiferaufhängung 18 ist am Basiselement 14 in der zweiten Raumrichtung 30 verstellbar angeordnet. Das ist durch den zur Greiferaufhängung 18 zugehörigen Doppelpfeil 30 verdeutlicht.

Die Gegenhaltereinrichtung 24 weist ein Anschlagorgan 32 und ein Gegenhalterorgan 34 auf, die zueinander mindestens annähernd senkrecht orientiert sind. Das beispielsweise von einer Anschlagleiste gebildete Anschlagorgan 32 ist in der zweiten Raumrichtung orientiert und beispielsweise mittels einer Verbindungsachse 36 über eine Konsole 37 mit der Greiferaufhängung 18 begrenzt federnd schwenkbeweglich verbunden. Das Gegenhalterorgan 34 ist dem Anschlagorgan 32 an dem von der Verbindungsachse 36 entfernten Endabschnitt des Anschlagorganes 32 zugeordnet. Das in die erste Raumrichtung orientierte Gegenhalterorgan 34 ist in der durch den Doppelpfeil 30 angedeuteten zweiten Raumrichtung hin- und herverstellbar. Entsprechend ist auch das Anschlagorgan 32 in der zweiten Raumrichtung 30 höhenverstellbar gelagert, wobei es beispielsweise durch nicht dargestellte Federn in einer Ruheposition gehalten ist. In Figur 1 ist das Gegenhalterorgan 34 von dem zu manipulierenden Gut 12 beabstandet dargestellt. Die Figur 1 zeigt eine erste Manipulationsposition der Roboter-Greifvorrichtung 10. In dieser ersten Manipulationsposition ist die Roboter-Greifvorrichtung 10 in bezug auf einen Untergrund 38, auf dem das zu manipulierende Gut 12 steht, gegen die Lotrechte geringfügig nach vorne oben geneigt. Das zu manipulierende Gut 12 wird mit Hilfe des federnd und höhenverschieblich vorgesehenen Anschlagorganes 32 der Roboter-Greifvorrichtung 10 geringfügig um eine Kippkante 40 angekippt, so daß zwischen dem Untergrund 38 und dem Boden 42 des Gutes 12 ein sich zur Kippkante 40 hin verjüngender Keilraum 44 ergibt. In diesen Keilraum 44 wird dann - ausgelöst durch das einen Berührungssensor bildenden Anschlagorgan 32 - das Greiferorgan 22 der Roboter-Greifvorrichtung 10 hineinbewegt und das Gegenhalterorgan 34 am Gut 12 stoßfrei, sanft angelegt. Durch die Höhenverschiebbarkeit des Anschlagorgans 32 wird dabei verhindert, daß sich das Anschlagorgan 32 gegenüber der Oberfläche des Guts 12 verschiebt und diese dadurch möglicherweise beschädigt.

Die so erreichte zweite Manipulationsposition ist in Figur 2 dargestellt, in der gleiche Einzelheiten mit denselben Bezugsziffern wie in Figur 1 bezeichnet sind, so daß es sich erübrigt, in Verbindung mit Figur 2 alle diese Einzelheiten noch einmal detailliert zu beschreiben.

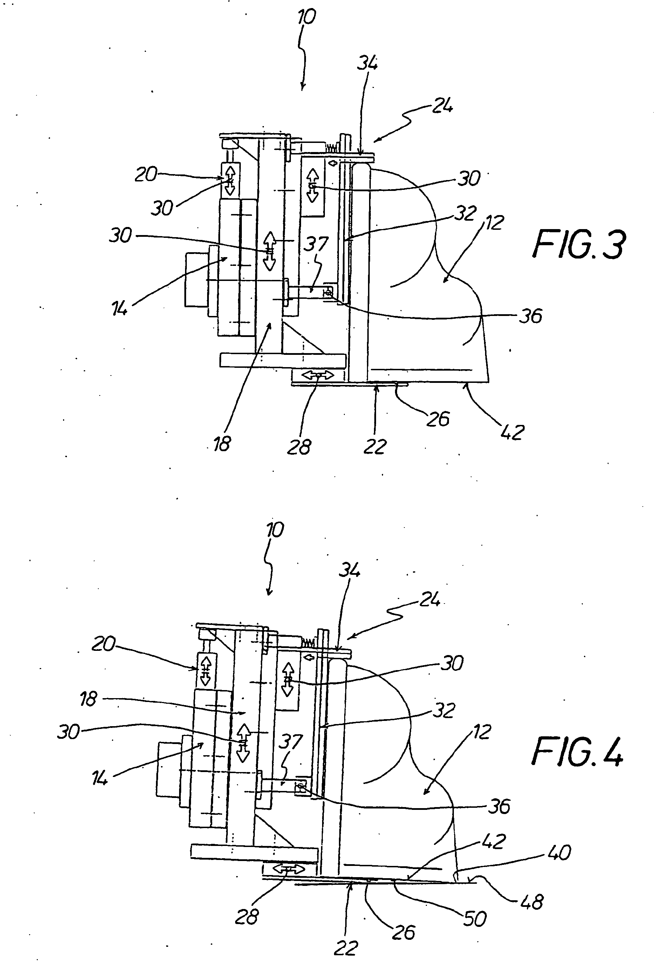

Nach diesem in Figur 2 dargestellten Festlegen des zu manipulierenden Guts 12 an der Roboter-Greifvorrichtung 10 kann das Gut 12 zu einem anderen Ort wie beispielsweise einer Transporteinrichtung 46 (sh. Figur 8) transportiert, d.h. umgesetzt werden. Eine entsprechende dritte Manipulationsposition ist in Figur 3 dargestellt, in der gleiche Einzelheiten mit denselben Bezugsziffern wie in den Figuren 1 und 2 bezeichnet sind, so daß es sich erübrigt, in Verbindung mit Figur 3 alle diese Einzelheiten noch einmal detailliert zu beschreiben.

Figur 4 verdeutlicht in einer den Figuren 1 bis 3 ähnlichen Seitenansicht eine vierte Manipulationsposition der Roboter-Greifvorrichtung 10, in der das Gut 12 auf einer Standfläche 48, beispielsweise der Standfläche 48 der Transporteinrichtung 46 gemäß Figur 8, gegen die Standfläche 48 geringfügig schräg geneigt abgesetzt wird.

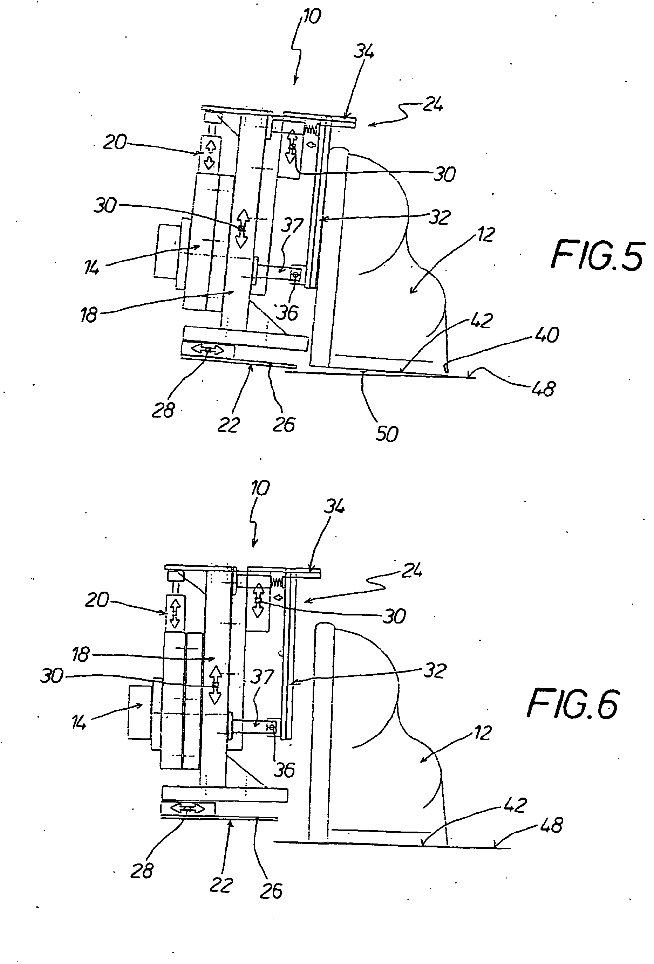

Das ist in Figur 4 verdeutlicht, in der gleiche Einzelheiten mit denselben Bezugsziffern wie in den Figuren 1 bis 3 bezeichnet sind. Die Figur 4 entspricht also quasi der Figur 2. Anschließend wird das Greiforgan 22 in dieser schräg geneigten Position des Guts 12 aus dem sich zur Kippkante 40 hin verengenden Keilraum 50 herausbewegt und wird das Gegenhalterorgan 34 vom Gut 12 entfernt, so daß das Gut 12 in dieser in Figur 5 dargestellten fünften Manipulationsposition nur noch an dem Anschlagorgan 32 der Gegenhaltereinrichtung 24 anliegt.

Anschließend wird die Roboter-Greifvorrichtung 10 vom Gut 12 wegbewegt, so daß das Gut 12 gravitationsbedingt eine Schwenkbewegung um die Kippkante 40 ausführt und mit ihrem Boden 42 auf der Standfläche 48 zu stehen kommt, wobei auch bei diesem Vorgang durch die Höhenverschieblichkeit des Anschlagorgans 32 Beschädigungen der an diesem anliegenden Oberfläche des Gutes 12 vermieden werden. Die Roboter-Greifvorrichtung 10 kann dann von dem auf der Standfläche 48 stehenden Gut 12 entfernt werden. Das ist in Figur 6 dargestellt. Die Roboter-Greifvorrichtung 10 kann dann zur Manipulation eines weiteren Gegenstandes 12 wieder in die in Figur 1 dargestellte erste Manipulationsposition usw. bewegt werden. Gleiche Einzelheiten sind in den Figuren 1 bis 6 mit denselben Bezugsziffern bezeichnet. Die Figur 7 verdeutlicht die Roboter-Greifvorrichtung 10 in einer der Figur 6 ähnlichen Position, wobei in Figur 7 eine Reinigungsvorrichtung 52 verdeutlicht ist, mittels welcher das Anschlagorgan 32 und/oder das Gegenhalterorgan 34 der Gegenhaltereinrichtung 24 im Bedarfsfall nach einer Gut-Manipulation gesäubert, d.h. gereinigt werden kann. Gleiche Einzelheiten sind auch in Figur 7 mit denselben Bezugsziffern wie in den Figuren 1 bis 6 bezeichnet, so daß es sich erübrigt, in Verbindung mit Figur 7 alle diese Einzelheiten noch einmal detailliert zu beschreiben. Gleiches gilt für die Figur 8, in der gleiche Einzelheiten ebenfalls mit denselben Bezugsziffern wie in den Figuren 1 bis 7 bezeichnet sind.

## Patentansprüche

1. Roboter-Greifvorrichtung, die ein an einem Roboter (16) anschließbares Basiselement (14) und eine Greiferaufhängung (18) aufweist, wobei zwischen der Greiferaufhängung (18) und dem Basiselement (14) eine Gewichtsentlastung (20) vorgesehen ist, und an der Greiferaufhängung (18) ein Greiferorgan (22) in einer ersten Raumrichtung (28) und eine Gegenhaltereinrichtung (24) in einer zur ersten Raumrichtung (28) mindestens annähernd senkrechten zweiten Raumrichtung (30) hin- und her verstellbar angeordnet sind, wobei die Gegenhaltereinrichtung (24) ein in der ersten Raumrichtung (28) orientiertes Gegenhalterorgan (34) aufweist, und das Gegenhalterorgan (34) an der Greiferaufhängung (18) in der zweiten Raumrichtung (30) verstellbar vorgesehen ist.
**dadurch gekennzeichnet,**
**dass** die Gegenhaltereinrichtung (24) ein in der zweiten Raumrichtung (30) orientiertes Anschlagorgan (32) aufweist, das an der Greiferaufhängung (18) federnd beweglich vorgesehen ist, dass die Gewichtsentlastung (20) eine programmierbare Luftfeder aufweist, und dass das Anschlagorgan (32) der Gegenhaltereinrichtung (24) einen Gut-Berührungssensor bildet.

2. Roboter-Greifvorrichtung nach Anspruch 1,
**dadurch gekennzeichnet,**
**dass** das Greiferorgan (22) als Greiferblech ausgebildet ist.

3. Roboter-Greifvorrichtung nach Anspruch 1,
**dadurch gekennzeichnet,**
**dass** das Anschlagorgan (32) der Gegenhaltereinrichtung (24) in der zweiten Raumrichtung (30) höhenverschieblich gelagert ist.

4. Roboter-Greifvorrichtung nach Anspruch 1,
**dadurch gekennzeichnet,**
**dass** das Gegenhalterorgan (34) eine programmierbare Druckeinstellung aufweist.

## Claims

1. Robotic gripping device which has a base element (14), which can be connected to a robot (16), and a gripper mounting (18), wherein a weight relief means (20) is provided between the gripper mounting (18) and the base element (14), and a gripper member (22) is arranged on the gripper mounting (18) in such a way as to be adjustable back and forth in a first spatial direction (28) and a counterholder device (24) is arranged on the gripper mounting (18) in such a way as to be adjustable back and forth in a second spatial direction (30) at least approximately perpendicular to the first spatial direction (28), wherein the counterholder device (24) has a counterholder member (34) oriented in the first spatial direction (28), and the counterholder member (34) is provided on the gripper mounting (18) in such a way as to be adjustable in the second spatial direction (30), **characterized in that** the counterholder device (24) has a stop member (32) which is oriented in the second spatial direction (30) and which is provided on the gripper mounting (18) such as to be movable in a spring-loaded manner, **in that** the weight relief means (20) has a programmable pneumatic spring, and **in that** the stop member (32) of the counterholder device (24) forms a product-contact sensor.

2. Robotic gripping device according to Claim 1, **characterized in that** the gripper member (22) is designed as a gripper plate.

3. Robotic gripping device according to Claim 1, **characterized in that** the stop member (32) of the counterholder device (24) is mounted such as to be vertically displaceable in the second spatial direction (30).

4. Robotic gripping device according to Claim 1, **characterized in that** the counterholder member (34) has a programmable pressure setting.

## Revendications

1. Dispositif de saisie robotique présentant un élément de base (14) pouvant être rattaché à un robot (16) et un organe de suspension de préhenseur (18), sachant qu'entre l'organe de suspension de préhenseur (18) et l'élément de base (14) est prévu un délestage (20), et que sur l'organe de suspension du préhenseur (18) est disposé un organe de préhension (22) dans une première direction spatiale (28) et un serre-pièce (24) se déplaçant en va-et-vient dans une deuxième direction spatiale (30) sinon perpendiculaire, du moins quasiment perpendiculaire à la première direction spatiale (28), sachant que le serre-pièce (24) présente un premier organe de saisie (34) orienté dans la première direction spatiale (28) et que l'organe de saisie (34) se déplace sur l'organe de suspension de préhenseur (18) dans la deuxième direction spatiale (30),
**caractérisé en ce que**
le serre-pièce (24) présente un organe de butée (32) orienté dans la deuxième direction spatiale (30), lequel peut se déplacer sur l'organe de suspension de préhenseur (18) et est amorti par un ressort, **en ce que** le délestage (20) présente un ressort à air programmable et **en ce que** l'organe de butée (32) du serre-pièce (24) constitue une sonde de contact de la pièce.

2. Dispositif de saisie robotique selon la revendication 1,
**caractérisé en ce que**
l'organe de préhension (22) est une tôle de préhension.

3. Dispositif de saisie robotique selon la revendication 1,
**caractérisé en ce que**
l'organe de butée (32) du serre-pièce (24) est réglable en hauteur dans la deuxième direction spatiale (30).

4. Dispositif de saisie robotique selon la revendication 1,
**caractérisé en ce que**
le serre-pièce (34) présente un réglage de pression programmable.
